# EUROPÄISCHE PATENTSCHRIFT

(11) **EP 2 252 187 B1**
(45) Veröffentlichungstag und Bekanntmachung des Hinweises auf die Patenterteilung: **29.10.2014**
(21) Anmeldenummer: 09719864.2
(22) Anmeldetag: 25.02.2009
(51) Int. Cl.: A47J 43/25, B26D 3/22

(54) **ELEKTROMOTORISCH BETRIEBENE KÜCHENMASCHINE**
FOOD PROCESSOR OPERATED BY AN ELECTRIC MOTOR
MACHINE DE CUISINE ÉLECTROMOTORISÉE

(30) Priorität: 12.03.2008 DE 102008013863
(43) Veröffentlichungstag der Anmeldung: 24.11.2010
(60) Teilanmeldung: 13162718.4
(73) Patentinhaber: Vorwerk & Co. Interholding GmbH, 42275 Wuppertal (DE)
(72) Erfinder: HOFFMANN, Sara, 51702 Bergneustadt (DE); SCHOMACHER, Jutta, 42489 Wülfrath (DE); ARNOLD, Hans-Peter, 58566 Kierspe (DE)
(74) Vertreter: Müller, Enno
(86) Internationale Anmeldenummer: PCT/EP2009/052212
(87) Internationale Veröffentlichungsnummer: WO 2009/112364

(56) Entgegenhaltungen:
- WO-A-03/075727
- FR-A- 2 109 123
- FR-A- 2 144 972

## Beschreibung

Die Erfindung betrifft eine elektromotorisch betriebene Küchenmaschine mit einer Schneideinheit zum Schneiden von Schneidgut, wobei die Schneideinheit eine rotierend angetriebene erste Schneide aufweist, die von einem, eine Einführöffnung aufweisenden Deckel übergriffen ist, wobei weiter vertikal unterhalb der ersten Schneide zweite Schneiden angeordnet sind, von denen eine oder mehrere zweite Schneiden quergerichtet sind zu der ersten Schneide, und wobei weiter das Schneidgut zur Durchsetzung der zweiten Schneiden durch die zweiten Schneiden nach vertikal unten gedrückt wird.

Küchenmaschinen der in Rede stehenden Art sind bekannt. Diese dienen insbesondere dem Schneiden von Gemüse, weiter beispielsweise von Kartoffeln, wobei mittels einer ersten Schneide durch Horizontalschnitt eine Scheibe vom Schneidgut abgeschnitten wird. Diese Scheibe wird quergerichteten zweiten Schneiden zugeführt, um so beispielsweise das Schneidgut streifenförmig aufzuteilen, weiter beispielsweise zum Schneiden von Pommes-frites-Stücken aus Kartoffeln. In diesem Zusammenhang sind Küchenmaschinen bekannt, die nur dem Schneiden derartiger Schneidgüter dienen. Alternativ werden Zusatzgeräte für Küchenmaschinen angeboten, die bei Bedarf der Küchenmaschine zugeordnet dem Schneiden von Schneidgut dienen.

Eine Küchenmaschine der in Rede stehenden Art ist beispielsweise aus der DE 1265 364 A1 bekannt. Diese weist eine Einführöffnung für das Schneidgut auf, der unterseitig in einer Horizontalebene eine erste Schneide zum Abschneiden einer Scheibe zugeordnet ist. Die abgeschnittene Scheibe wird auf eine unter der ersten Schneide angeordneten Horizontalebene abgelegt und über einen drehfest mit der ersten Schneide angeordneten Mitnehmer in Horizontalrichtung durch die quergerichteten zweiten Schneiden gedrückt zum Schneiden des scheibenförmigen Schneidguts in Vertikalrichtung der Scheibe, womit streifenförmige Schneidgutteile herstellbar sind. Zur Herstellung von annähernd würfelförmigen Schneidgutteilen wird in der Einführöffnung ein weiteres, der ersten Schneide vorgelagertes Schneidelement eingesetzt. Das Schneidgut wird hierbei allein durch Eindrücken des Schneidgutes in die Einführöffnung durch den Benutzer in einer ersten, senkrecht zur Schneidebene der ersten Schneide ausgerichteten Ebene geteilt. Die unter der Einführöffnung rotierende erste Schneide legt entsprechend streifenförmige Abschnitte auf der unter dieser angeordneten Horizontallage ab. Über den Mitnehmer werden diese Streifen durch die quergerichteten zweiten Schneiden gedrückt, zur Herstellung der Würfelform. Entsprechend erfolgt das dreidimensionale Beschneiden des Schneidgutes in drei aufeinander folgenden Phasen.

Bei einer aus der FR 2109123 A bekannten Küchenmaschine sind an dem die ersten Schneiden aufweisenden Messer unterseitige Vorsprünge ausgebildet zur Durchdrückung des Schneidgutes durch die zweiten Schneiden. Das Messer ist unterhalb des Deckels unmittelbar an der Welle abgestützt. Bei einer aus der FR 144972 A bekannten Küchenmaschine wird über eine Welle eine Querwelle angetrieben, auf welcher Messer angeordnet sind. Diese sind relativ zu der Querwelle feststehend. Umlaufend mit der Querwelle ist ein unteres Plattenteil und ein oberes Plattenteil vorgesehen. Zwischen den Plattenteilen erfolgt beim Herunterdrücken eines Plattenteiles ein Abschneiden.

Die Erfindung beschäftigt sich mit der Aufgabe bei handhabungstechnisch einfachem Aufbau die wahlweise Herstellung von Schneidgutscheiben, -streifen und/oder -würfeln erreichen zu können.

Diese Aufgabe ist beim Gegenstand des Anspruches 1 gelöst, wobei darauf abgestellt ist, dass das Schneidgut zufolge einer aus dem feststehenden Deckel abgeleiteten Druckbeaufschlagung bewegt ist.

Die Vertikalverlagerung der durch die erste Schneide abgeschnittenen Schneidgutscheibe durch die zweiten, drehfest mit der ersten Schneide angeordneten Schneiden erfolgt entsprechend resultierend aus der Relativverlagerung der Schneiden zu dem feststehenden Deckel der Küchenmaschine, welcher Deckel die Schneiden überdeckt und weiter bevorzugt die Einführöffnung aufweist. Der Deckel ist zufolge dieser Ausgestaltung Bestandteil der Schneidvorrichtung.

Die Druckbeaufschlagung wird in einer weiter bevorzugten Ausgestaltung des Erfindungsgegenstandes durch einen in dem drehangetriebenen Teil, welches sowohl die erste Schneide als auch die weiteren zweiten Schneiden aufweist, quer zur Drehrichtung bewegbaren Stempel erzeugt, der mit einer Auflaufschrägen zusammenwirkt. Dieser Stempel bewegt sich entsprechend in bevorzugter Ausgestaltung in Vertikalrichtung, bezogen auf die Horizontalausrichtung der ersten Schneide, zum Durchdrücken der von der ersten Schneide abgeschnittenen Schneidgutscheibe durch die in vertikaler Richtung zu der ersten Schneide beabstandeten zweiten Schneiden. Die Druckbeaufschlagung erfolgt durch Zusammenwirkung des Stempels mit einer feststehenden Auflaufschräge. Diese ist in weiter bevorzugter Ausgestaltung an dem feststehenden Deckel ausgebildet und wirkt auf den unter dem Deckel drehfest, jedoch vertikal verlagerbar mit dem die erste Schneide tragenden Schneidenteil verbundenen Stempel zusammen. Dieser Stempel ist weiter bevorzugt in seiner Ausgangsstellung federvorgespannt, dies weiter bevorzugt in Richtung auf die die Auflaufschräge aufweisende Deckelunterseite, so dass der Stempel über Federdruckbeaufschlagung gegen die Auflaufschräge tritt bzw. die feststehende Auflaufschräge gegen die Federkraft des exzentrisch zu einer vertikalen Drehachse der Schneidscheibe umlaufenden Stempel auf diesen vertikal verlagernd einwirkt. Alternativ kann auch die gesamte Schneideinheit oder zumindest das den Stempel tragende Schneidenteil schräg zur Antriebsachse angeordnet sein, wobei die Deckelunterseite eine plane, quer zur Achse ausgerichtete Stempelandrückfläche aufweist.

Die Schneideinheit mit der ersten Schneide und mit den drehfest mit der ersten Schneide verbundenen zweiten Schneiden sowie dem Stempel und die auf den Stempel einwirkende feststehende Auflaufschräge, darüber hinaus auch das Anschlagteil sind in einem bodenseitig eine Rührwerkmitnahme aufweisenden Rührgefäß angeordnet, wobei die Drehung der Schneiden aus der Drehung der Rührwerkmitnahme abgeleitet ist. Hierbei handelt es sich in bevorzugter Ausgestaltung um ein Rührgefäß einer Küchenmaschine, welches bodenseitig für das in dem Rührgefäß bei üblicher Nutzung anzuordnende Rührwerk eine Steckmitnahme aufweist. Bei Anordnung der Schneideinheit wird in bevorzugter Ausgestaltung das Rührwerk entfernt und die Mitnahme zur Kopplung an die rotierenden Elemente der Schneideinheit genutzt. Bei einer derartigen Küchenmaschine handelt es sich bevorzugt um eine wie aus der DE 102 10 442 A1 bekannte Küchenmaschine. Der Inhalt dieser Patentanmeldung wird hiermit vollinhaltlich in die Offenbarung vorliegender Erfindung mit einbezogen, auch zu dem Zwecke, Merkmale dieser Patentanmeldung in Ansprüche vorliegender Erfindung mit einzubeziehen.

Zufolge dieser Ausgestaltung ist die Schneideinheit als Zusatzteil für eine Küchenmaschine konzipiert, die wahlweise dem maschinenseitigen Rührgefäß zugeordnet werden kann. Das Rührgefäß selbst dient zum einen der Abstützung und Lagerung der Schneideinheit und zum anderen zugleich zur Aufnahme der geschnittenen Schneidgutteile. Bei einer bevorzugten Anordnung der Schneideinheit im Bereich der Rührgefäßöffnung ist das Rührgefäß zum Antrieb der Schneideinheit in bevorzugter Ausgestaltung zentral durchsetzt von einer Antriebswelle oder dgl., die fußseitig mit der gefäßseitigen Rührwerkmitnahme zusammenwirkt.

Um unterschiedliche Schneiddicken der durch die erste Schneide abgetrennten Schneidgutscheibe anzubieten, ist in einer Weiterbildung des Erfindungsgegenstandes vorgesehen, dass der vertikale Abstand zwischen der ersten und den zweiten Schneiden verstellbar ist. So ist weiter bevorzugt eine stufenlose Verstellung von beispielsweise 1 mm Schneiddicke bis hin zu 10 oder 15 mm Schneiddicke erreichbar, alternativ auch eine stufenweise Schneiddickenverstellung, beispielsweise in 1 mm-Abständen. In bevorzugter Ausgestaltung ist die Schneidgutdicke nach dem durch die erste Schneide erzielten Horizontalschnitt über eine einstellbare Rampe variabel einstellbar, welche Rampe beispielsweise über ein Scharnier mit einer der Schneidscheiben der Schneideinheit verbunden ist. Die Einstellung kann über eine Stellschraube erfolgen, wobei weiter bevorzugt das Scharnier parallel zu einer Tangente der ersten Schneide ausgerichtet ist.

Zur Aufnahme von während des Schneidprozesses einwirkender axialer Kräfte ist in einer bevorzugten Ausgestaltung vorgesehen, dass eine, die zweiten Schneiden aufnehmende Trägerplatte in ihrem radial äußeren Bereich abgestützt ist, so weiter bevorzugt auf einer Stufe des aufnehmenden Rührgefäßes. Radiale Kräfte werden bevorzugt über eine unterseitig des Deckels zentrierte Antriebswelle aufgenommen. Weiter alternativ sind die die erste Schneide und die zweiten Schneiden aufnehmenden Trägerplatten der Schneideinheit axial und radial in einer deckelseitigen Lagerstelle geführt.

In einer weiter bevorzugten Ausgestaltung erfolgt die Drehbewegung der Schneiden getriebeuntersetzt, dies zur Drehzahlreduzierung bei gewünschtem hohen Drehmoment. Dies ist bevorzugt durch ein Planetengetriebe gelöst.

Die Drehbewegung ist bevorzugt mittels einer vertikal verlaufenden, das Rührgefäß bevorzugt zentral durchsetzenden Welle übertragen, die einerends mit den antreibbaren Trägerplatten für die erste Schneide und die zweiten Schneide verbunden ist und andernends in bevorzugter Ausgestaltung drehfest mit der Rührwerkmitnahme des Rührgefäßes verbunden ist. In dieser Welle ist bevorzugt das Getriebe, beispielsweise das Planetengetriebe angeordnet.

Das die nach Durchsatz der ersten Schneide abfallende Schneidgutscheibe drehhindernde Anschlagteil ist in weiter bevorzugter Ausgestaltung in Drehrichtung der Schneiden begrenzt beweglich, insbesondere zur Auslenkung desselben im Zuge des Durchdrückens der Schneidgutscheibe durch die zweiten Schneiden mittels des vertikal verlagerbaren Stempels. In diesem Zusammenhang erweist es sich weiter von Vorteil, wenn das Anschlagteil durch Federkraft in eine Ausgangsstellung vorgespannt ist. Alternativ kann das Anschlagteil auch starr, das heißt nicht begrenzt beweglich ausgebildet sein, wobei dann das Schnittgut, das heißt die abgeschnittene Schneidgutscheibe in einen vertieften Schacht der die zweiten Schneiden aufnehmenden Trägerplatte abgeworfen wird, um hier im Zuge der Rotation der Trägerplatte vertikal von oben durch den Stempel beaufschlagt zu werden. Ein elastisches Anschlagteil kann zum großen Teil während der Rotation in gespannter Position gehalten sein und gezielt freigegeben werden, um das Schneidgut in den Schacht abzustoßen.

In weiter alternativer Ausgestaltung ist die untere Trägerplatte vollständig als Schneidgitter ausgebildet, wobei die obere, die erste Schneide tragende Trägerplatte axial zu der so gestalteten Gitterscheibe über eine schiefe Ebene relativ verlagerbar ist. Die obere Trägerplatte drückt entsprechend nach vertikal unten. Alternativ drückt die untere Trägerscheibe vertikal zur Durchsetzung des Schneidguts durch die zweiten Schneiden nach oben.

Weiter sind Durchtritte für eine Flüssigkeitsschmierung radial außen zwischen dem Topfrand des Rührgefäßes und den Trägerplatten vorgesehen. Hierbei wird bevorzugt die Flüssigkeit aus dem Schnittgut zur Schmierung genutzt.

Darüber hinaus kann unterhalb der Schneideinheit ein Gareinsatz in dem Rührgefäß angeordnet sein, welcher mitdrehend oder fest mit dem Rührgefäß positioniert ist. Das Schnittgut wird in dem Gareinsatz aufgefangen, Flüssigkeit hingegen tritt durch entsprechend in dem Gareinsatz vorgesehene Öffnungen aus und wird in dem Rührgefäß gesondert gesammelt. Der Gareinsatz kann zudem auch Teil der Antriebswelle sein.

Nachstehend ist die Erfindung anhand der beigefügten Zeichnung, welche lediglich ein Ausführungsbeispiel darstellt, näher erläutert. Es zeigt:
- Fig. 1: eine Küchenmaschine der in Rede stehenden Art mit einer zugeordneten Schneideinheit in Seitenansicht;

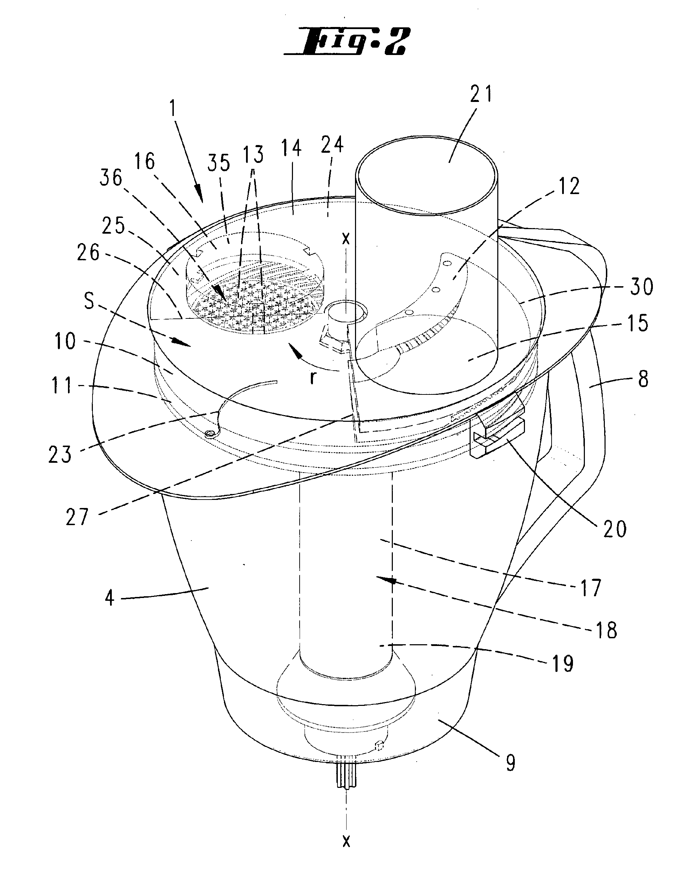

- Fig. 2: die Schneideinheit zugeordnet einem Rührgefäß der Küchenmaschine in perspektivischer Darstellung;

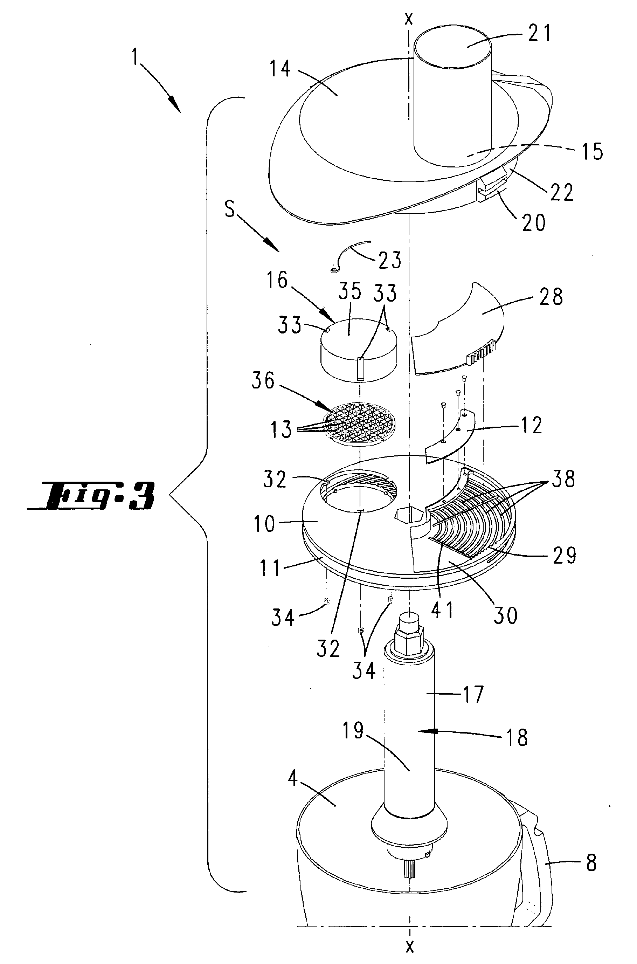

- Fig. 3: die Schneideinheit mit zugeordnetem Deckel und Rührgefäß in perspektivischer Explosionsdarstellung;

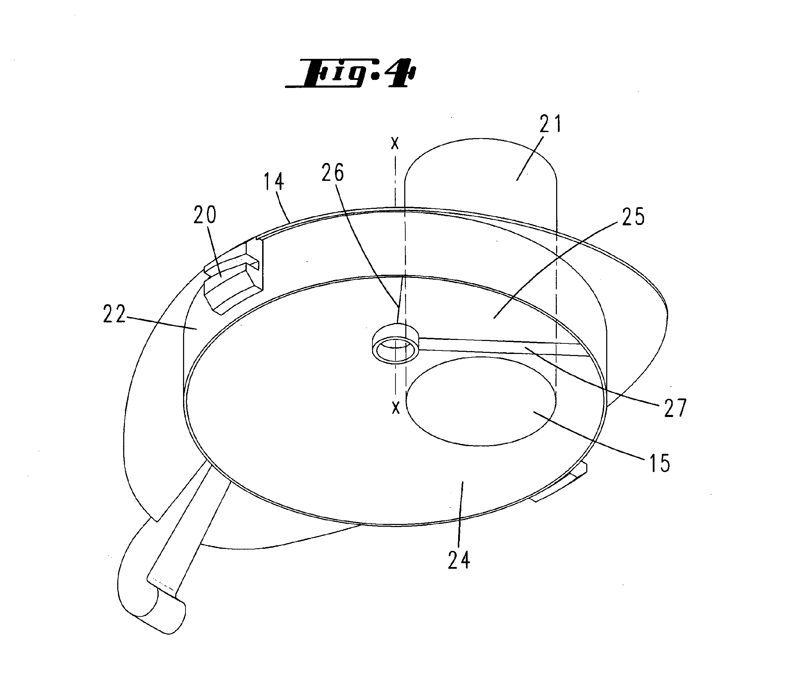

- Fig. 4: eine perspektivische Unteransicht gegen den Deckel der Schneideinheit;

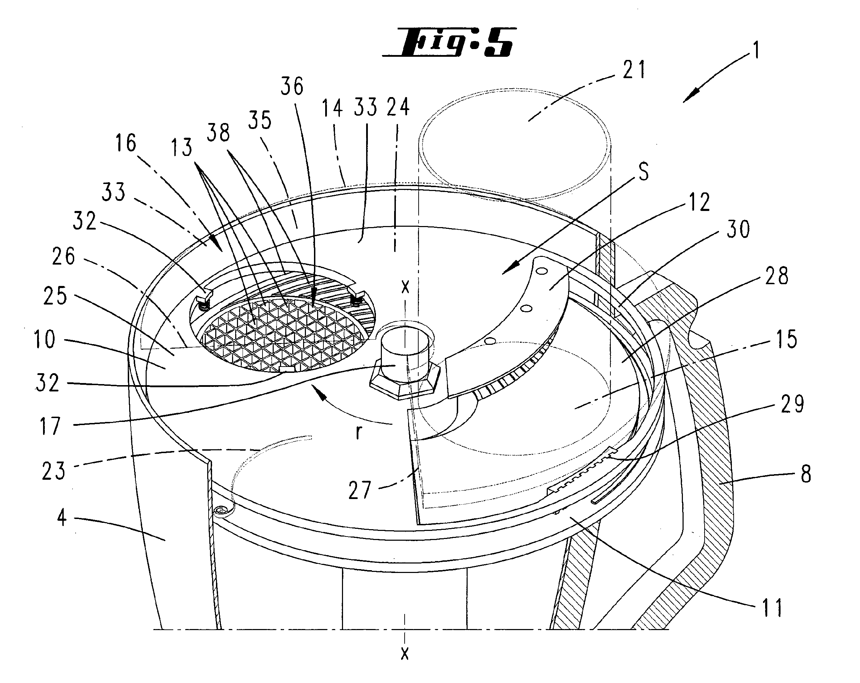

- Fig. 5: eine partiell aufgebrochene Perspektivdarstellung der in dem Rührgefäß angeordneten Schneideinheit;

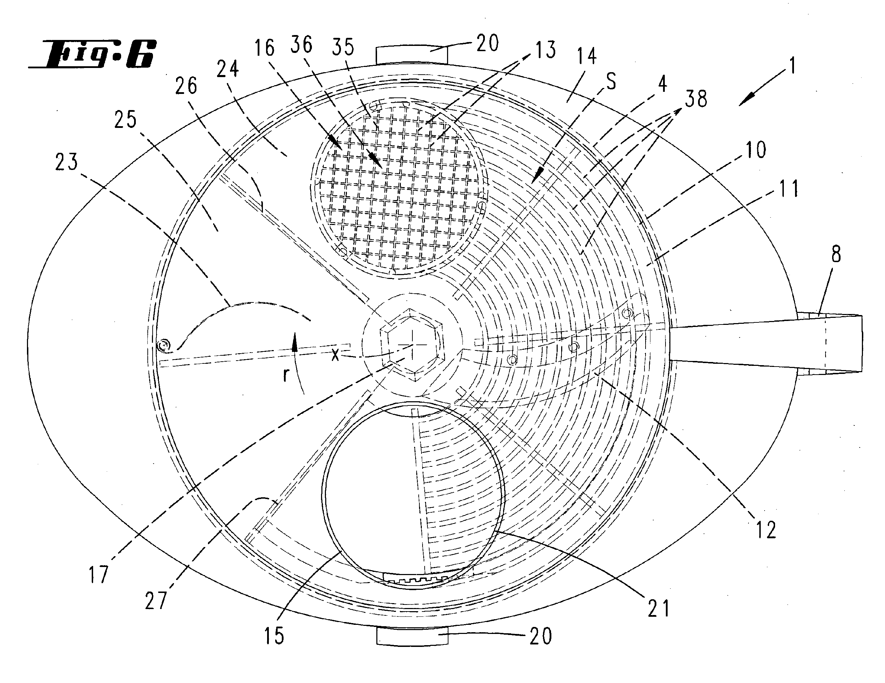

- Fig. 6: die Draufsicht auf den Deckel mit darunter angeordneter Schneideinheit;
- Fig. 7-12: in schematischen Darstellungen den Ablaufplan eines Schneidprozesses;
- Fig. 13: eine Detaildarstellung der Schneideinheit im Vertikalschnitt;

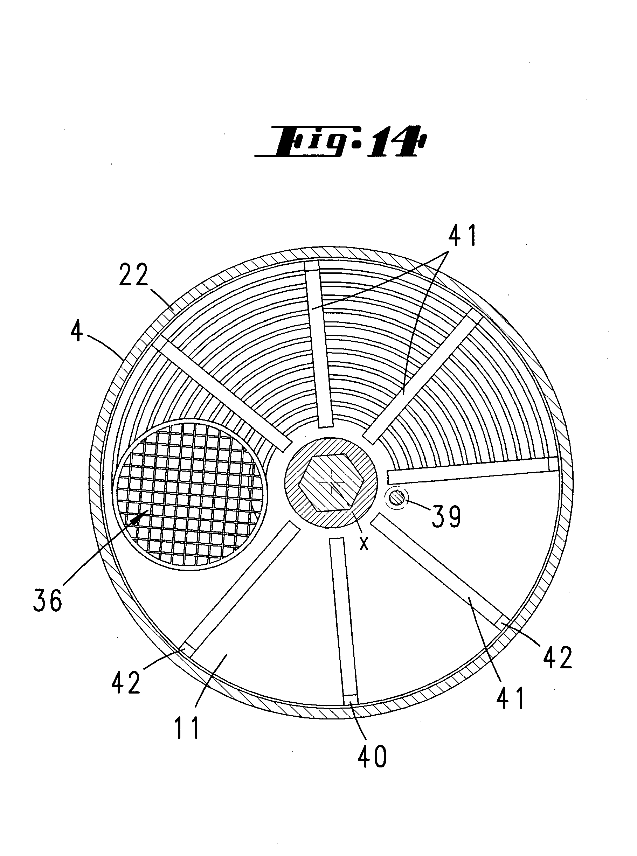

- Fig. 14: den Horizontalschnitt gemäß der Linie XIV-XIV in Fig. 13.

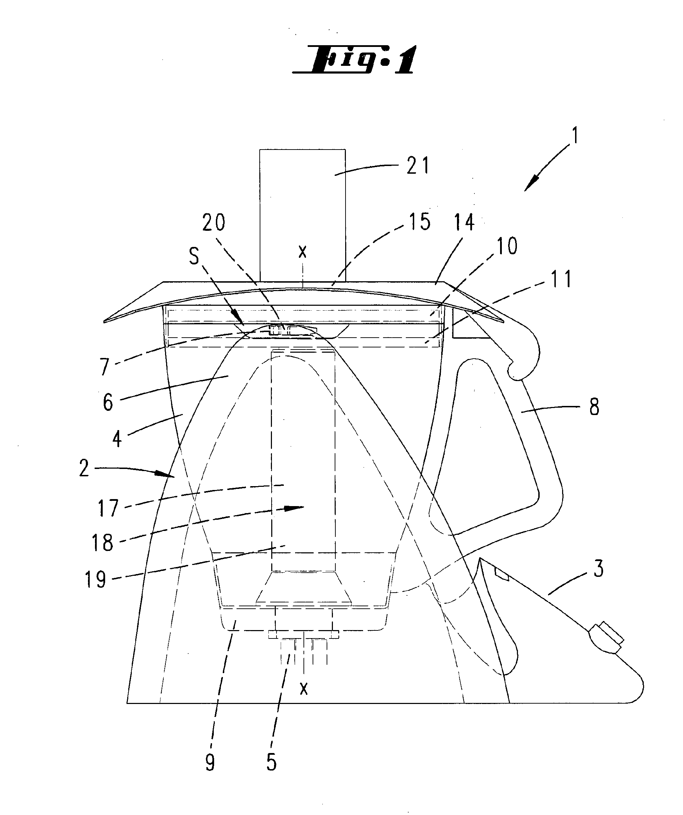

Dargestellt und beschrieben ist zunächst mit Bezug zu Fig. 1 eine Küchenmaschine 1 mit einer Rührgefäß-Aufnahme 2 und einem Bedienfeld 3.

Der Küchenmaschine 1 ist ein Rührgefäß 4 zuordbar, in dem dieses in die Rührgefäß-Aufnahme 2 eingesetzt wird. Dem Rührgefäßboden ist zugeordnet eine Rührwerkmitnahme 5 vorgesehen, welche über einen in der Küchenmaschine 1 unterhalb der Aufnahme 2 angeordneten, nicht näher dargestellten Elektroantrieb betrieben wird.

Die Rührgefäß-Aufnahme 2 ist im Wesentlichen gebildet aus zwei gegenüberliegend angeordneten Schultern 6. In deren oberen Randbereichen sind aufeinander zugewandt Verriegelungselemente 7 in Form von horizontalen, in einer Richtung hin geöffnete Nuten vorgesehen.

Das in die Rührgefäßaufnahme 2 einzusetzende Rührgefäß 4 besitzt einen senkrecht ausgerichteten Haltegriff 8. Der Sockelbereich 9 des Rührgefäßes 4 ist topfartig mit kreisrundem Querschnitt ausgebildet.

Die Küchenmaschine 1 kann mit einem entsprechenden Rührwerk im Rührgefäß 4 ausgestattet in üblicher Weise zum Verrühren, Mixen und/oder Garen von Lebensmitteln genutzt werden, wozu das Rührgefäß 4 deckelverschlossen ist.

Zum Zerkleinern bzw. Schneiden von Schneidgut ist dem Rührgefäß 4 eine Schneideinheit S zuordbar. Diese besteht im Wesentlichen aus zwei drehfest miteinander verbundenen Trägerplatten 10 und 11 mit Schneiden 12 und 13, einem Deckel 14 mit einer Einführöffnung 15, einem in der oberen Trägerplatte 10 gehaltenen, vertikal verlagerbaren Stempel 16 und einer vertikal verlaufenden Welle 17 zum Anschluss der Schneideinheit S an das Rührwerk 5.

Die Welle 17 erstreckt sich vertikal, zentral in dem Rührwerk 5 und ist gebildet durch ein untersetzendes Planetengetriebe 18 zur Reduzierung der durch die Küchenmaschine 1 bzw. dem Rührwerksantriebs angebotenen Drehzahl. Das die Welle 17 bzw. das Planetengetriebe 18 aufnehmende Getriebegehäuse 19 ist zur Festlegung in dem Rührgefäß 4 zugewandt dem Sockelbereich 9 bajonettartig gestaltet, zum zentralen Durchsatz des Sockelbereiches 9, wobei der Bajonettverschluss unterseitig des Sockelbereiches 9 wirkt. Das nach vertikal unten weiter vorragende Wellenende 20 steht in drehfestem Formschluss zur Rührwerkmitnahme 5.

Das der Rührwerkmitnahme 5 abgewandte vertikal obere Ende der Welle 17 bzw. des Abtriebs des Planetengetriebes 18 durchsetzt zentral die Trägerplatten 10 und 11, wobei das freie Ende unterseitig des Deckels 14 frei drehend gelagert ist. Der Durchsatz der Trägerplatten 10 und 11 erfolgt formschlüssig, so dass diese drehfest mit der Welle 17 bzw. mit der Abtriebswelle des Planetengetriebes 18 verbunden sind.

Die im Bereich des Öffnungsrandes des Rührgefäßes 4 angeordneten Trägerplatten 10 und 11 sind im Betriebszustand überdeckt von dem Deckel 14. Dieser wird auf das Rührgefäß 4 aufgesetzt, wonach durch Verdrehen des Deckels 14 um die durch die Welle 17 definierte Vertikalachse x bevorzugt im Uhrzeigersinn eine Verriegelung durchgeführt wird. Hierzu weist der Deckel 14 zunächst außenrandseitig gegenüberliegend angeordnete, radial abragende Verriegelungsnasen 20 auf, welche bei einer Verdrehung des Deckels 14 in die nutartigen Verriegelungselemente 7 der Rührgefäß-Aufnahme 2 bzw. der Schultern 6 eintauchen. Neben der hierdurch gebildeten Festlegung des Deckels 14 an dem Rührgefäß 4 wird mittels der nutartigen Verriegelungselemente 7 auch eine Abfrage durchgeführt, ob ein Deckel 14 aufgesetzt ist oder nicht. Dies weiter im Zusammenhang mit den in die Verriegelungselemente 7 eintauchenden Verriegelungsnasen 20. So wird insbesondere die Inbetriebnahme des Rührwerkes bei fehlendem Deckel 14 unterbunden. Diesbezüglich wird auf die DE 10 131 483 A1 verwiesen. Der Inhalt dieser Patentanmeldung wird hiermit vollinhaltlich in die Offenbarung vorliegender Erfindung mit einbezogen, auch zu dem Zwecke, Merkmale dieser Patentanmeldung in Ansprüche vorliegender Erfindung mit einzubeziehen.

Darüber hinaus wird zufolge der Ausgestaltung des Deckels 14 eine Festlegung desselben an zwei Stellen mit dem Rührgefäß 4 und an zwei weiteren Stellen mit der Rührgefäß-Aufnahme 2 erreicht, womit eine ausreichende Koaxialität der Achsen von Schneideinheit S und Rührwerk 5 gegeben ist.

Der Deckel 14 ist außenmittig mit der vertikal den Deckel 14 durchsetzenden Einführöffnung 15 versehen. Diese ist oberseitig des Deckels 14, das heißt abgewandt der Schneideinheit S umgeben von einem die Einführung von Schneidgut erleichternden Schacht 21.

Unterseitig ist der Deckel 14 mit einem koaxial zur Achse x ausgerichteten, die Innenkontur des Öffnungsbereiches des Rührgefäßes 4 aufnehmenden und entsprechend durchmesserangepasst ausgebildeten Kragen 22 versehen. An diesem ist wandungsinnenseitig ein nach radial innen eingreifendes Anschlagteil 23 befestigt. Dieses ist in dem dargestellten Ausführungsbeispiel ein Federelement in Form einer Blattfeder, welches ausgehend von einer nahezu radial ausgerichteten Grundstellung nach außen in Richtung auf den Kragen 22 entgegen der Federkraft durch Ausschwenken ausweichen kann.

Mit Bezug auf eine Draufsicht auf den Deckel 14 ist das Anschlagteil 23 um etwa 90° in Drehrichtung r der Welle 17 der Einführöffnung 15 nachgeordnet.

Des Weiteren ist der Deckel 14 unterseitig, das heißt den Trägerplatten 10 und 11 zugewandt mit einer Auflaufschrägen 24 versehen, die in Umlaufrichtung um die Achse x über einen Winkelbetrag von 270° stetig ansteigt. Über die verbleibendem 90° hingegen ist die Deckelunterseite eben ausgebildet. Diese ebene Deckelunterseite 25 erstreckt sich in Drehrichtung r der Welle 17 - mit Beug auf eine Draufsicht auf den Deckel 14 - beginnend unmittelbar im Anschluss an die Einführöffnung 15, den Eingreifbereich des deckelseitigen Anschlagteiles 23 aufnehmend. Der Beginn der Auflaufschrägen 24 ist in den Darstellungen mit dem Bezugszeichen 26 versehen. Die das Ende der Auflaufschrägen 24 definierende Stufe trägt das Bezugszeichen 27.

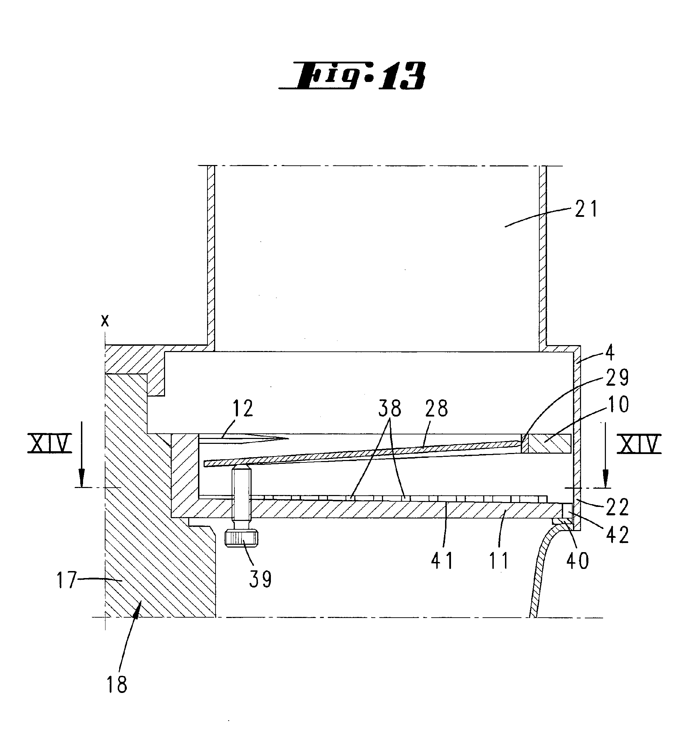

Die beiden Trägerplatten 10 und 11 sind scheibenförmig mit kreisrundem Grundriss gestaltet, darüber hinaus gleich groß ausgebildet, wobei eine vertikale Beabstandung der Trägerplatten 10 und 11 vorgesehen ist. Diese vertikale Beabstandung ist zur Variierung der Schneidgutdicke verstellbar, wozu eine einstellbare Rampe 28 vorgesehen ist, die über ein Scharnier 29 mit der oberen Trägerplatte 10 verbunden ist. Über eine Stellschraube 39 ist die vertikale Beabstandung einstellbar (vgl. Fig. 13). Die Stellschraube 39 ist in der unteren Trägerplatte 11 gehalten und wirkt mit ihrem freien Ende unterseitig gegen den dem Scharnier 29 abgewandten Endbereich der Rampe 28.

Die obere Trägerplatte 10 trägt eine erste Schneide 12. Diese ist bei horizontaler Ausrichtung klingenartig gestaltet und ist weiter so ausgelegt, dass im Zuge einer Drehung der Trägerplatte 10 in Drehrichtung r ein ziehender Schnitt erreicht wird. In Drehrichtung r vorgelagert der Schneide 12 ist die Trägerplatte 10 mit einer fensterartigen Durchbrechung 30 versehen, durch welche Durchbrechung 30 abgeschnittenes Schneidgut auf die untere, durch die Trägerplatte 11 definierte Ebene abfällt. Durch die Schneiddickeneinstellung über die verstellbare Rampe 28 wird der vertikale Abstand zwischen Schneide 12 und Rampe 28 auf die gewünschte Schneidgutdicke angepasst.

Des Weiteren ist in der Trägerplatte 10 in Drehrichtung r der ersten Schneide 12 etwa um 90° nachgeordnet ein Stempel 31 gehaltert. Dieser ist, wie auch die Einführöffnung 15 des Deckels 14 konzentrisch zur Achse x positioniert, wobei weiter bei jeweils kreisrundem Grundriss von Einführöffnung 15 und Stempel 31 deren vertikalen Mittenachsen in etwa auf einer gemeinsamen Umlauflinie zur Achse x positioniert sind, wobei weiter der Stempel 31 gegenüber der Einführöffnung 15 durchmesservergrößert ist.

Der Stempel 31 ist in der Trägerplatte 10 vertikal verlagerbar gehaltert, jedoch gegen Drehung in der Trägerplatte 10 gesichert, wozu ausgehend von dem den Stempel 31 umgreifenden Öffnungsrand der Trägerplatte 10 radial innen einragende Nasen 32 in entsprechend positionierte Vertikalnuten 33 des Stempels 31 einragen.

Der Stempel 31 ist in Richtung auf die Deckelunterseite hin federbelastet. Hierzu sind Druckfedern 34 vorgesehen. In einer Grundstellung des Stempels 31 fluchtet dessen plane, weiter sich in einer senkrechten Ebene zur Achse x ausgerichtete Unterseite mit der der unteren Trägerplatte 11 zugewandten Unterfläche der Trägerplatte 10. Die der Deckelunterseite zugewandte Stirnfläche 35 des Stempels 31 verläuft angepasst an die Schrägung der Auflaufschräge 24 des Deckels 14 aus einer horizontalen Ebene heraus geneigt. Die Stirnfläche 35 wirkt mit der Unterseite des Deckels 14, das heißt im Zuge der Umlaufbewegung der Trägerplatte 10 mit der Auflaufschräge 24 bzw. mit dem ebenen Deckenunterseitenabschnitt 25 zusammen.

Deckungsgleich zum Stempel 31 ist in der unteren Trägerplatte 11 ein Schneidelement 36 vorgesehen. Dieses ist gleich dem Stempel 31 kreisscheibenförmig gestaltet und weist in dem dargestellten Ausführungsbeispiel im Grundriss kreuzförmig angeordnete zweite Schneiden 13 auf. Die Schneiden 13 sind vertikal ausgerichtet, weiter in Ebenen, die senkrecht ausgerichtet sind zur Schneidebene der ersten Schneide 12.

Das Schneidelement 36 ist auswechselbar in der Trägerplatte 11 gehaltert, so dass mittels unterschiedlicher Schneidelemente 36 unterschiedliche Schneidgutabschnitte erreicht werden können. Das dargestellte Schneidelement 36 dient zum Schneiden würfelförmiger Schneidelementabschnitte. Alternative Schneidelemente 36 können sich beispielsweise durch eine engere oder weitere Maschenweite gegenüber dem dargestellten Schneidelement 36 unterscheiden. Weiter kann ein Schneidelement 36 auch nur zweite Schneiden 13 aufweisen, die sich nicht kreuzend, sondern vielmehr parallel zueinander ausgerichtet verlaufen, um so streifenförmige Schneidgutabschnitte herzustellen. Weiter alternativ kann, wenn scheibenförmige Schneidgutabschnitte gewünscht sind, das Schneidelement 36 entfernt werden, wonach die durch die erste Schneide 12 abgeschnittene Schneidgutscheibe keiner weiteren Schneidbearbeitung zugeführt wird.

Das deckelseitig wandungsinnenseitig des Kragens 22 befestigte Anschlagteil 23 greift in den vertikalen Abstandsbereich zwischen den Trägerplatten 10 und 11 ein.

Die Trägerplatten 10 und 11 sind an zwei Punkten gelagert. Zur Aufnahme von axialen Kräften gleiten die Trägerplatten 10 und 11, gegebenenfalls auch nur die untere Trägerplatte 11 auf dem Außenrand des Rührgefäßes 4. Zur Aufnahme von radialen Kräften ist die Welle 27 einerends unterseitig des Deckels 14 und andernends im Bereich des Rührwerks 5 durch ein Wälzlager gelagert.

Gemäß der Darstellung in Fig. 13 liegt der umlaufende Rand der unteren Trägerplatte 11 unter Zwischenschaltung eines Gleitringes 40 auf dem Rand des Rührgefäßes 4 auf. Der Gleitring 40 minimiert hierbei den Reibwiderstand. Über radial ausgerichtete Abflussrinnen 41 auf der Trägerplatte 10 zugewandten Oberfläche der Trägerplatte 11 gelangt während des Schneidprozesses Schneidgutflüssigkeit in den Auflagebereich; dies weiter unterstützt durch die im Prozess auftretenden Fliehkräfte. Radial endseitig gehen die nach außen abfallenden Abflussrinnen 41 über in die Trägerplatte 11 durchsetzende Durchbrechungen 42. Diese liegen in vertikaler Überdeckung zu dem Gleitring 40, womit die Gleitfläche im Betrieb durch die austretende Schneidgutflüssigkeit eine Schmierung erfährt.

In einer alternativen Ausgestaltung kann die Abstützung der Trägerplatte 11 auf dem Gefäßrand auch unter Zwischenschaltung von Rollen oder dergleichen erfolgen.

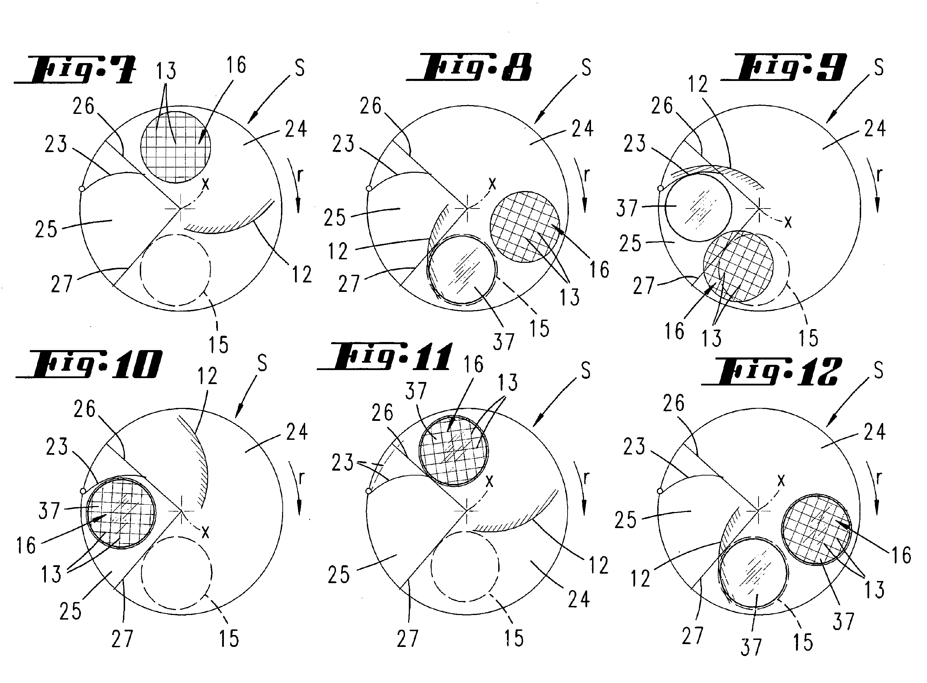

Die Funktionsweise der Küchenmaschine 1 bzw. der Schneideinheit S wird nachstehend anhand des in den Fig. 7 bis 12 dargestellten Ablaufplans erläutert: Die Zuführung des Schneidguts erfolgt durch den Schacht 21 über einen handbedienbaren, nicht dargestellten Stopfer, mit dem das Schneidgut in Position gebracht und gehalten wird. Die Unterkante des Schneidguts tritt unter Druckbeaufschlagung über den Stopfer gegen die Oberfläche der oberen Trägerplatte 10. Über die mit der rotierenden Trägerplatte 10 mitgeführte Schneide 12 wird von dem Schneidgut eine Schneidgutscheibe 37 abgeschnitten, deren in vertikaler Richtung betrachtete Dicke abhängig ist vom vertikalen Abstand der Trägerplatten 10 und 11 zueinander. Die entstandene neue Unterkante des Schneidguts läuft weiter auf der Trägerplatte 10 bis zum nächsten Schnittprozess.

Über die Rampe 28 wird die Schneidgutscheibe 37 auf der unteren Trägerplatte 11 abgelegt, deren Oberfläche durch konzentrisch angeordnete, rippenartige Erhebungen 38 strukturiert ist, was ein Gleiten der im Zuge der weiteren Rotation der Trägerplatten 10 und 11 und dabei einhergehendem Rückhalten der Schneidgutscheibe 37 durch das Anschlagteil 23 begünstigt. Das Anschlagteil 23 positioniert zufolge der Relativbewegung zwischen Trägerplatte 11 und feststehendem Anschlagteil 23 die sich an dem Anschlagteil 23 abstützende Schneidgutscheibe 37 zwischen Stempel 31 und Schneidelement 26 (vgl. Fig. 9 und 10). In dieser Situation ist der Stempel 31 durch die Druckfedern 34 gegen die ebene Deckenunterseite 25 des Deckels 14 belastet. Entsprechend befindet sich der Stempel 31 in einer angehobenen Grundstellung.

Im Zuge der weiteren Drehbewegung der Trägerplatten 10 und 11 verlagert der Stempel 31 zunächst das Anschlagteil 23 derart nach radial außen, dass dieses die Schneidgutscheibe 37 frei gibt, woraufhin Letztere auf dem Schneidelement 36 aufliegend mit der Trägerplatte 11 weiter bewegt wird. Die Ausrückverlagerung des Anschlagteils 23 erfolgt entgegen der auf das Anschlagteil 23 einwirkende Federkraft. Das Anschlagteil 23 kann sich darüber hinaus auch nach außen abbiegen, wenn sich auf der Kreisbahn des Anschlagteils 23 ein Hindernis befindet (vgl. auch Fig. 11).

Nach Überlaufen des Anschlagteiles 23 gelangt die Stirnfläche 35 des Stempels 31 in den Bereich der deckelseitigen Auflaufschräge 24, zufolge dessen eine vertikale Absenkung des Stempels 31 mit zunehmendem Umlaufweg über die Auflaufschräge 24 erreicht wird. Hierbei wird aus der Rotationsbewegung der den Stempel 31 halternden Trägerplatte 11 eine Linearbewegung des Stempels 31 erzeugt. Hierbei hat die Steigung der Auflaufschräge 24 die Eigenschaft einer schiefen Ebene, so dass hierdurch ein Übersetzungsverhältnis erzeugt wird, welches eine ausreichend große Kraft zum Durchdrücken der Schneidgutscheibe 37 durch das Schneidelement 36 erzeugt.

Der Durchdrückprozess der Schneidgutscheibe 37 durch das Schneidelement 36 nach vertikal unten erfolgt über den gesamten Umlaufweg der Auflaufschräge 24, wobei vor Beendigung dieses Durchdrückprozesses bereits ein neuer Schneidprozess im Bereich der ersten Schneide 12 zur Bereitstellung einer neuen Schneidgutscheibe 37 beginnt. Entsprechend schneidet die erste Schneide 12 bereits eine Scheibe ab, während der vorherige Schneidprozess zum vertikalen Schneiden einer Schneidgutscheibe 37 sich gerade bei der Hälfte der Steigung der Auflaufschräge 24 befindet (vgl. Fig. 12). Erst kurz vor Erreichen des in Fig. 10 dargestellten Schrittes ist der vertikale Schneidprozess durch die Schneiden 13 des Schneidelements 36 beendet. Der Stempel 31 hat den steigungsfreien, ebenen Deckenbereich 25 erreicht und ist federbeaufschlagt wieder in die Grundstellung zurückverlagert.

Das dreidimensional geschnittene Schneidgut fällt nach Durchtritt durch das Schneidelement 36 nach unten in das Rührgefäß 4 und wird dort gespeichert.

Da während einer Umdrehung eine Scheibe des Schneidguts abgeschnitten, diese Scheibe auf das Schneidelement 36 befördert und hiernach mittels des Stempels 31 vertikal unten durchgedrückt wird, weiter der Stempel 31 über die Federn 34 wieder zurück in die Grundstellung befördert wird, ist die Drehzahl relativ gering gehalten. So ist bevorzugt eine Drehzahl von 40 bis 100 U/min vorgesehen. Um hierbei das nötige Drehmoment welches zum Schneiden und Durchdrücken des Schneidgutes erforderlich ist aufzubringen, ist das vorbeschriebene Planetengetriebe 18 zwischengeschaltet.

Zur Reinigung ist die Schneideinheit S zusammen mit dem Deckel 14 aus dem Rührgefäß 4 entnehmbar. Unter radialer Rückverlagerung des federnden Anschlagteils 23 kann hiernach der Deckel 14 von der Schneideinheit S abgenommen werden. Die Trägerplatten 10 und 11 sind weiter bevorzugt über eine nicht dargestellte Schraubverbindung miteinander drehfest verbunden. Nach Aufheben dieser Schraubverbindung sind die getrennten Trägerplatten 10 und 11 einer Reinigung zuführbar.

### BEZUG SZEICHENLISTE

- 1: Küchenmaschine
- 2: Rührgefäß-Aufnahme
- 3: Bedienfeld
- 4: Rührgefäß
- 5: Rührwerk
- 6: Schultern
- 7: Verriegelungselemente
- 8: Haltegriff
- 9: Sockelbereich
- 10: Trägerplatte
- 11: Trägerplatte
- 12: Schneide
- 13: Schneide
- 14: Deckel
- 15: Einführöffnung
- 16: Stempel
- 17: Welle
- 18: Planetengetriebe
- 19: Getriebegehäuse
- 20: Verriegelungsnasen
- 21: Schacht
- 22: Kragen
- 23: Anschlagteil
- 24: Auflaufschräge
- 25: ebene Deckenunterseite
- 26: Schrägenbeginn
- 27: Stufe
- 28: Rampe
- 29: Scharnier
- 30: Durchbrechung
- 31: Stempel
- 32: Nasen
- 33: Vertikalnuten
- 34: Druckfedern
- 35: Stirnflache
- 36: Schneidelement
- 37: Schneidgutscheibe
- 38: Erhebungen
- 39: Stellschraube
- 40: Gleitring
- 41: Abflussrinne
- 42: Durchbrechung

- S: Schneideinheit

- r: Drehrichtung

- x: Achse

## Patentansprüche

1. Elektromotorisch betriebene Küchenmaschine (1) mit einer Schneideinheit (S) zum Schneiden von Schneidgut, wobei die Schneideinheit (S) eine rotierend angetriebene erste Schneide (12) aufweist, die von einem eine Einführöffnung (15) aufweisenden Deckel (14) übergriffen ist, wobei weiter vertikal unterhalb der ersten Schneide (12) zweite Schneiden (13) angeordnet sind, von denen eine oder mehrere quergerichtet sind zu der ersten Schneide (12), und wobei weiter das Schneidgut zur Durchsetzung der zweiten Schneiden (13) durch die zweiten Schneiden (13) nach vertikal unten gedrückt wird, **dadurch gekennzeichnet, dass** das Schneidgut durch die zweiten Schneiden (13) zufolge einer aus dem feststehenden Deckel (14) abgeleiteten Druckbeaufschlagung bewegt ist.

2. Küchenmaschine nach Anspruch 1, **dadurch gekennzeichnet, dass** die zweiten Schneiden (13) zusammen mit den ersten Schneiden (12) drehangetrieben sind.

3. Küchenmaschine nach einem der Ansprüche 1 oder 2, **dadurch gekennzeichnet, dass** das Schneidgut die zweiten Schneiden (13) zufolge einer Drehhinderung durch ein gehäusefestes Anschlagteil (23) durchsetzt.

4. Küchenmaschine nach einem der vorhergehenden Ansprüche, **dadurch gekennzeichnet, dass** die Druckbeaufschlagung durch einen in dem drehangetriebenen Teil quer zur Drehrichtung bewegbaren Stempel (31) erzeugt wird, der mit einer Auflaufschräge (24) zusammenwirkt.

5. Küchenmaschine nach Anspruch 4, **dadurch gekennzeichnet, dass** die Auflaufschräge (24) am Deckel (14) ausgebildet ist und/oder dass der Stempel (31) in seine Ausgangsstellung federvorgespannt ist.

6. Küchenmaschine nach einem der vorhergehenden Ansprüche, **dadurch gekennzeichnet, dass** die Schneideinheit (S) in einem bodenseitig eine Rührwerkmitnahme (5) aufweisenden Rührgefäß (4) angeordnet ist und dass die Drehung der Schneiden (12,13) aus der Drehung der Rührwerkmitnahme abgeleitet ist.

7. Küchenmaschine nach einem der vorhergehenden Ansprüche, **dadurch gekennzeichnet, dass** der vertikale Abstand zwischen der ersten und den zweiten Schneiden (12,13) verstellbar ist und/ dass eine die zweiten Schneiden (13) aufnehmende Trägerplatte (11) in ihrem radial äußeren Bereich abgestützt ist, wobei, bevorzugt die Abstützung auf einer Stufe des aufnehmenden Rührgefäßes (4) erfolgt.

8. Küchenmaschine nach einem der vorhergehenden Ansprüche, **dadurch gekennzeichnet, dass** die Schneiden (12,13) drehangetrieben sind und dass die Drehbewegung der Schneiden (12,13) getriebeuntersetzt erfolgt.

9. Küchenmaschine nach einem der vorhergehenden Ansprüche, **dadurch gekennzeichnet, dass** die Schneiden (12,13) drehangetrieben sind und dass die Drehbewegung mittels einer vertikal verlaufenden Welle (17) übertragen ist.

10. Küchenmaschine nach einem der Ansprüche 8 oder 9, **dadurch gekennzeichnet, dass** das Getriebe zur getriebeuntersetzten Drehbewegung der Schneiden (12,13) in der Welle angeordnet ist.

11. Küchenmaschine nach einem der Ansprüche 3 bis 10, **dadurch gekennzeichnet, dass** das Anschlagteil (23) in Drehrichtung (r) der Schneiden (12,13) begrenzt beweglich ist.

12. Küchenmaschine nach einem der Ansprüche 3 bis 11, **dadurch gekennzeichnet, dass** das Anschlagteil (23) durch Federkraft in eine Ausgangsstellung vorgespannt ist.

## Claims

1. Electric-motor-driven food processor (1), comprising a cutting unit (S) for cutting material to be cut, said cutting unit (S) comprising a rotationally driven first blade (12) which is overlapped by a cover (14) having an insertion opening (15), second blades (13) additionally being arranged vertically below said first blade (12), of which second blades one or more are oriented transversely to the first blade (12), and the material to be cut, in order to pass through the second blades (13), also being pushed downwards vertically through said second blades (13), **characterised in that** the material to be cut is moved through the second blades (13) as a result of pressurisation derived from the fixed cover (14).

2. Food processor according to claim 1, **characterised in that** the second blades (13) are rotationally driven together with the first blades (12).

3. Food processor according to either claim 1 or claim 2, **characterised in that** the material to be cut passes through the second blades (13) as a result of rotation being prevented by a stop part (23) fixed to the housing.

4. Food processor according to any of the preceding claims, **characterised in that** the pressurisation is generated by a plunger (31) which can be moved transverse to the direction of rotation in the rotationally driven part and cooperates with a guide bevel (24).

5. Food processor according to claim 4, **characterised in that** the guide bevel (24) is formed on the cover (14) and/or **in that** the plunger (31) is spring-biased in its initial position.

6. Food processor according to any of the preceding claims, **characterised in that** the cutting unit (S) is arranged in a mixing vessel (4) having a mixer driver (5) on the base thereof, and **in that** the rotation of the blades (12, 13) is derived from the rotation of the mixer driver.

7. Food processor according to any of the preceding claims, **characterised in that** the vertical spacing between the first and second blades (12, 13) is adjustable, and **in that** a carrier plate (11) receiving the second blades (13) is supported in the radially outer region thereof, the support preferably being provided by a shoulder in the mixing vessel (4) being received.

8. Food processor according to any of the preceding claims, **characterised in that** the blades (12, 13) are rotationally driven, and **in that** the rotational movement of the blades (12, 13) occurs by means of gear reduction.

9. Food processor according to any of the preceding claims, **characterised in that** the blades (12, 13) are rotationally driven, and **in that** the rotational movement is transferred by means of a vertically extending shaft (17).

10. Food processor according to either claim 8 or claim 9, **characterised in that** the transmission for producing the rotational movement of the blades (12, 13) by gear reduction is arranged in the shaft.

11. Food processor according to any of claims 3 to 10, **characterised in that** the stop part (23) is movable, to a limited extent, in the direction of rotation (r) of the blades (12, 13).

12. Food processor according to any of claims 3 to 11, **characterised in that** the stop part (23) is biased into an initial position by spring force.

## Revendications

1. Appareil de cuisine entraîné par un moteur électrique (1) avec une unité de coupe (S) pour couper de la matière à découper, dans lequel l'unité de coupe (S) présente un premier couteau (12) entrainé en rotation, lequel est en prise avec un couvercle (14) présentant une ouverture d'insertion (15), dans lequel en outre, verticalement au-dessus du premier couteau (12), sont agencés des deuxièmes couteaux (13), parmi lesquels un ou plusieurs sont orientés perpendiculairement au premier couteau (12), et dans lequel en outre la matière à découper est pressée verticalement vers le bas par les deuxièmes couteaux (13) lors de la mise en oeuvre des deuxièmes couteaux (13), **caractérisé en ce que** la matière à découper est déplacée par les deuxièmes couteaux (13) du fait de l'application de la pression dérivée du couvercle (14) se sécurisant.

2. Appareil de cuisine selon la revendication 1, **caractérisé en ce que** les deuxièmes couteaux (13) sont entrainés en rotation conjointement avec les premiers couteaux (12).

3. Appareil de cuisine selon l'une des revendications 1 ou 2, **caractérisé en ce que** la matière à découper met en oeuvre les deuxièmes couteux (13) du fait d'un obstacle à la rotation par une partie de butée (23) solidaire du boîtier.

4. Appareil de cuisine selon l'une des revendications précédentes, **caractérisé en ce que** l'application de la pression est effectuée par un piston (31) déplaçable perpendiculairement à la direction de rotation dans la partie entraînée en rotation, le piston coopérant avec une rampe en pente (24).

5. Appareil de cuisine selon la revendication 4, **caractérisé en ce que** la rampe en pente (24) est formée sur le couvercle (14) et/ou le piston (31) est précontraint par ressort dans sa position initiale.

6. Appareil de cuisine selon l'une des revendications précédentes, **caractérisé en ce que** l'unité de coupe (S) est agencée dans une cuve de mélange (4) présentant du côté de son fond un entraînement de mélangeur (5) et **en ce que** la rotation des couteaux (12, 13) dérive de la rotation l'entraînement de mélangeur.

7. Appareil de cuisine selon l'une des revendications précédentes, **caractérisé en ce que** la distance verticale entre les premiers et deuxièmes couteaux (12, 13) est réglable et/en ce que une plaque de support (11) recevant les deuxièmes couteaux (13) est étayé dans sa zone radialement extérieure, de préférence l'étaiement s'effectue sur un gradin de la cuve de mélange (4) recevant.

8. Appareil de cuisine selon l'une des revendications précédentes, **caractérisé en ce que** les couteaux (12, 13) sont entraînés en rotation et **en ce que** le mouvement de rotation des couteaux (12, 13) s'effectue par un entraînement par le dessous.

9. Appareil de cuisine selon l'une des revendications précédentes, **caractérisé en ce que** les couteaux (12, 13) sont entraînés en rotation et **en ce que** le mouvement de rotation est transmis au moyen d'un arbre s'étendant verticalement (17).

10. Appareil de cuisine selon l'une des revendications 8 ou 9, **caractérisé en ce que** l'engrenage pour l'entraînement par le dessous du mouvement de rotation des couteaux (12, 13) est disposé dans l'arbre.

11. Appareil de cuisine selon l'une des revendications 3 à 10, **caractérisé en ce que** la partie de butée (23) est mobile de façon limitée dans le sens de rotation (r) des couteaux (12, 13).

12. Appareil de cuisine selon l'une des revendications 3 à 11, **caractérisé en ce que** la partie de butée (23) est précontrainte par une force élastique dans une position de départ.
